# EUROPÄISCHE PATENTSCHRIFT

(11) **EP 2 581 307 B1**
(45) Veröffentlichungstag und Bekanntmachung des Hinweises auf die Patenterteilung: **21.01.2015**
(21) Anmeldenummer: 12007005.7
(22) Anmeldetag: 09.10.2012
(51) Int. Cl.: B64C 31/036, B64D 17/02

(54) **Tragfläche mit innerer Aussteifung für Gleitschirme**
Aerofoil with internal reinforcement for paragliders
Surface portante avec renforcement interne pour parapentes

(30) Priorität: 14.10.2011 IT BZ20110049
(43) Veröffentlichungstag der Anmeldung: 17.04.2013
(73) Patentinhaber: Riederer, Alfred, 39049 Pfitsch (BZ) (IT)
(72) Erfinder: Riederer, Alfred, 39049 Pfitsch (BZ) (IT)
(74) Vertreter: Oberosler, Ludwig

(56) Entgegenhaltungen:
- DE-A1- 3 934 449
- DE-U1- 8 815 686
- DE-U1- 20 308 973
- US-A- 5 362 017
- US-B1- 6 364 251

## Beschreibung

Es ist bekannt dass ein Schirm, welcher für den Gleitflug konzipiert ist, aus einer Tragfläche, auch Segel genannt, besteht an welcher das Gurtzeug des Piloten mittels Leinen aufgehängt ist. Die Tragfläche des Gleitschirms, welche aus besonders resistentem Gewebe hergestellt ist, ist nicht steif und ihre Form erhält sie durch den inneren Druck welcher dynamisch durch die Luftströmung durch die am vorderen Bereich der Tragfläche vorgesehenen Öffnungen einer Reihe von Zellen, sogenannte Kammerzellen, aufgebaut wird, diese Zellen werden dabei aufgeblasen und geben dadurch der Tragfläche ihre Form. Die besagten Kammerzellen sind durch Gewebe-Profilrippen, welche das gewölbte Obersegel der Tragfläche mit dem Untersegel verbinden, unter sich getrennt. Die einzelnen Gewebe-Profilrippen der Kammerzellen sind zum Großteil mit Durchlässen versehen um die Luftzirkulation innerhalb der Tragfläche zu ermöglichen und dadurch ein möglichst gleichmäßiges Aufblasen und Flugverhalten über die gesamte Erstreckung der Tragfläche, welche als zwei Tragflächenhälften oder als eine linke und eine rechte Segelhälfte gesehen werden kann, zu erreichen.

Jede der Tragflächenhälften ist mit dem Gurtzeug des Piloten mittels Galerieleinen und Stammleinen aus extrem resistentem und nicht dehnbarem Material verbunden. Jedes der beiden Bündel von Stammleinen endet in einer verstärkten Öse um mittels Karabiner am Gurtzeug befestigt zu werden.

Es sind verschiedene technische Lösungen bekannt um die Form der Tragfläche welche insbesondere durch die aufgeblasenen Kammerzellen definiert wird, während der verschiedenen Flugphasen, stabiler zu halten. Es ist auch der Einsatz von Latten in PVC oder Kohlefasern bekannt um eine bessere Verteilung der Belastung der einzelnen Leinen zu erreichen und/oder um, im Fall einer verminderten dynamischen Wirkung der Luft welche durch die Öffnungen an der Eintrittskante der Tragfläche einfließt, bzw. um, im Falle von Druckbelastungen am Obersegel und/oder am Untersegel, die Beibehaltung der Form der einzelnen Kammerzellen zu erreichen und das Zusammenfallen dieser und/oder das Zusammenfallen der Tragfläche zu vermeiden. Aus der DE 10 2009 053917 ist der Einsatz von aufgeschäumtem Kunststoff an den Gewebe-Profilrippen im Bereich der Befestigung der Leinen bekannt um eine Verminderung der Anzahl der Leinen und die bessere Verteilung der Belastung dieser an der Tragfläche zu erreichen und auf diese Weise auch eine Verminderung des Luftwiderstandes und eine Stabilisierung der Form der Gewebe-Profilrippen zu erreichen. Die bekannte technischen Lösungen um die Tragfläche des Gleitschirms während extremer Flugmanöver und/oder bei Turbolenzen oder in Schwierigen Flugsituationen, betreffend der Beibehaltung der Form stabiler zu halten, haben nicht den erwarteten Erfolg gebracht.

Weitere wesentliche Beispiele des Standes der Technik sind in US 6,364,251 B und DE 203 08 973 U gegeben.

Die Erfindung stellt sich die Aufgabe eine Gleitschirmtragfläche der eingangs beschriebenen Art zu schaffen welche dem Benutzer eine beachtenswerte Flugsicherheit auch in extremen Flugsituationen bietet, welche durch die Witterungsbedingungen oder welche absichtlich oder unabsichtlich vom Benutzer selbst verursacht werden.

Zur Lösung dieser Aufgabe schlägt die Erfindung eine Tragfläche vor welche aus einer oberen Tragfläche besteht welche intern mit einem, über ihre gesamte Spannweite sich erstreckendem, bogenförmigen Gestänge ausgestattet ist, wobei die Enden des Gestänges mit einem unteren geradlinigen horizontalen Gestänge verbunden sind, welches sich innerhalb einer unteren Tragfläche erstreckt. Im Mittelbereich der oberen und unteren Tragfläche sind die Gestänge durch eine vertikale Stütze verbunden. Diese Gestänge und die vertikale Stütze können aus mehreren Rohrteilen zusammengesetzt sein welche teleskopartig in Längsrichtung ausziehbar oder zusammensteckbar sind.

Die Gewebe-Profilrippen welche die Zellenkammern bilden sind, im mittleren Bereich zwischen dem Ober- und dem Untersegel, im vorderen Bereich der Tragfläche, mit Querdurchlässen für das

Gestänge versehen welches, innerhalb der Tragfläche, die Position eines Längsholmes einnimmt.

Im Bereich der vertikalen Stütze sind, am Untersegel der oberen Tragfläche und am Obersegel der unteren Tragfläche, Durchlassöffnungen vorgesehen welche mit Manschetten oder Vorrichtungen versehen sind um das Anliegen des Gewebes an der Stütze zu erreichen. An den Verbindungspunkten zwischen den Enden des Gestänges der oberen Tragfläche und dem Gestänge der unteren Tragfläche sowie zwischen den Enden der vertikalen Stütze und dem Mittelbereich des Gestänges der oberen Tragfläche und des Gestänges der unteren Tragfläche, können Steckkupplungen vorgesehen sein welche eine schnelle und sichere Verbindung ermöglichen. Die Anordnung der Gestänge bildet insgesamt eine halbmondförmige Struktur welche durch die Vorspannung des bogenförmigen Gestänges und durch die vertikale Stütze stabilisiert ist, wodurch den beiden verbundenen Tragflächen eine beachtenswerte Formstabilität und somit eine hohe Flugsicherheit, auch bei extremen Flug- und Witterungsbedingungen, verliehen wird.

Die Erfindung wird nachfolgend anhand eines, in den beigelegten Zeichnungen schematisch dargestellten, vorzuziehenden Ausführungsbeispieles einer erfindungsgemäßen Tragfläche mit innerer Aussteifung für Gleitschirme näher erklärt, dabei erfüllen die Darstellungen rein erklärenden, nicht einschränkenden Zweck.

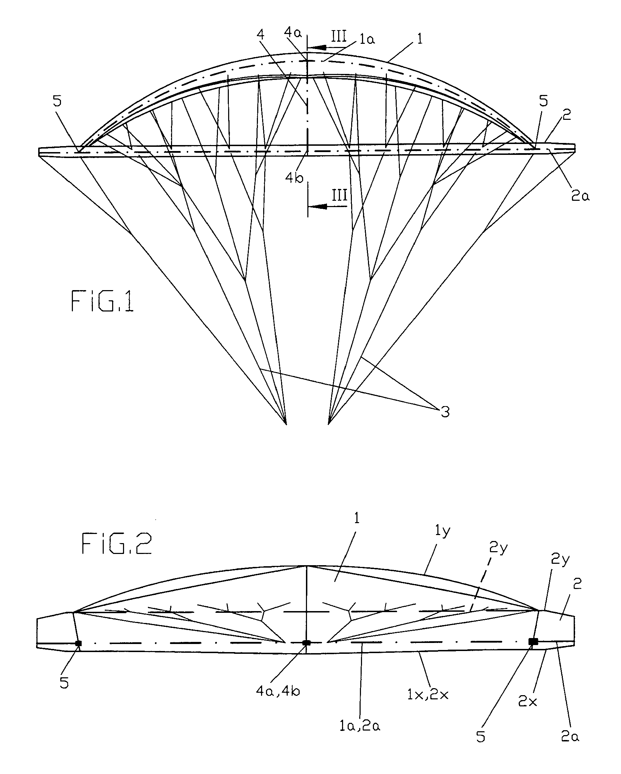

Die Fig. 1 zeigt die Vorderansicht einer erfindungsgemäßen, zusammengesetzten Tragfläche eines Gleitschirms, zusammen mit den Leinenbündeln, ohne Gurtzeug für den Piloten, in Flugstellung und mit eingesetztem, durch Strich-Punkt Linie dargestelltem, Gestänge samt vertikaler Stütze.

Die Fig. 2 zeigt in Draufsicht die selbe, in Fig. 1 dargestellte, zusammengesetzte Tragfläche.

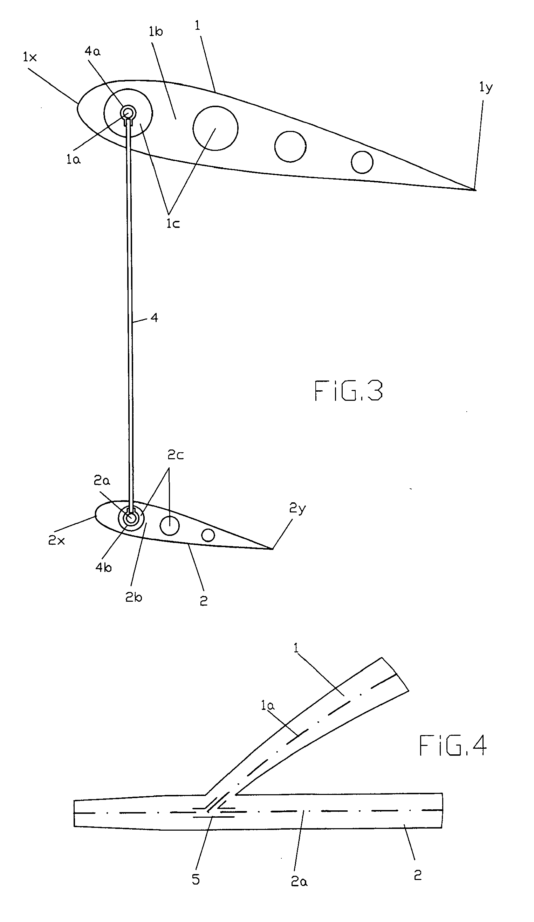

Die Fig. 3 zeigt im vergrößertem Maßstab einen Querschnitt gemäß der, in Fig. 1 eingezeichneten, Schnittebene III-III welche sich vertikal durch die obere und die untere Tragfläche erstreckt.

Die Fig. 4 zeigt das Detail der Verbindung zwischen einem der Enden des Stabilisierungsgestänges der oberen Tragfläche und dem Gestänge der unteren Tragfläche sowie die Anordnung des Gewebes der beiden Tragflächen im Bereich dieser Verbindung.

Die Tragfläche des Gleitschirms besteht erfindungsgemäß aus einer zusammengesetzten Tragfläche bestehend aus einer oberen Tragfläche 1 welche in Flugstellung eine bekannte bogenförmige Stellung einnimmt und aus einer unteren Tragfläche 2 welche in Flugstellung eine wesentlich geradlinige, horizontale Stellung einnimmt.

Die obere Tragfläche weist sämtliche konstruktive Merkmale der bekannten einfachen Tragflächen der Gleitschirme auf, sie weist vorne eine Eintrittskante 1 x mit den bekannten Öffnungen für den Eintritt der Luft in die einzelnen Kammerzellen auf welche durch die Gewebe-Profilrippen 1 b mit Querdurchlässen 1c und hinten durch eine Austrittskante 1y definiert sind; an den besagten Rippen sind die bekannten Leinen der Leinenbündel befestigt welche mit ihrem unteren Ende am Gurtzeug des Piloten befestigt sind, insbesondere sind an dieser Tragfläche auch die Leinen für das Steuern (bremsen, beschleunigen) des Gleitschirms befestigt. Erfindungsgemäß wird die obere Tragfläche durch ein Gestänge 4a stabilisiert welches nach Arte eines Längsholmes angeordnet ist und sich frei durch Querdurchlässe 1c, welche an den Profilrippen 1 b vorgesehen sind, erstreckt. Dieses Gestänge 4a der bogenförmigen, vorgespannten oberen Tragfläche wird an jedem der beiden Enden mittels Verbindungskupplung 5 an einem unteren wesentlich geradlinigem Gestänge 2a im Inneren einer unteren Tragfläche 2 mit Eintrittskante 2x und Austrittskante 2y, mit Gewebeprofilrippen 2b mir Querdurchlässen 2c, befestigt. Auch das Gestänge 2a erstreckt sich durch einen der Durchlässe 2c an den einzelnen Gewebe-Profilrippen 2b der Tragfläche 2 und erstreckt sich, nach Art eines Längsholmes, über die gesamte Spannweite der Tragfläche. Im mittleren Bereich ist das obere Gestänge 1 a mittels einer vertikalen Stütze 4 mit dem unteren Gestänge verbunden, dabei ist die Stütze mittels Verbindungskupplung 4a am oberen Gestänge 1a und mittels Verbindungskupplung 4b am unteren Gestänge 2a befestigt. Die besagten Gestänge 1 a, 2a und die Stütze 4 bestehen vorzugsweise aus mehreren, in Längsrichtung zusammengesteckten, Stäben oder aus zusammengesteckten teleskopartigen Rohrelementen, natürlich müssen dabei die Steckverbindungen gegen Herausziehen gesichert sein. Erfindungsgemäß kann die untere, wesentlich geradlinige Tragfläche 2 mit der oberen Tragfläche 1 identische Spannweite haben oder die untere Tragfläche 2 kann, gegenüber der oberen Tragfläche 1, größere Spannweite haben, ohne auszuschließen dass die obere Tragfläche 1 über die Verbindungsstellen 5 mit der unteren Tragfläche 2 nach unten ragt.

Die Leinen für die Steuerung des Gleitschirms können ausschließlich an der oberen Tragfläche 1 befestigt sein oder mindestens teilweise auch an der unteren Tragfläche 2 befestigt sein; das selbe gilt auch für die Leinen welche ausschließlich am Gurtzeug des Piloten befestigt sind.

Das Innere der oberen Tragfläche 1 kann mit dem Inneren der unteren Tragfläche 2, im Bereich der Verbindungen 5 zwischen dem oberen Gestänge 1a und dem unteren Gestänge 2a, kommunizieren so dass die Luft frei von einer Tragfläche in die andere fließen kann, ohne auszuschließen dass die besagten Durchgänge für die Luft durch bekannte Ventile verschlossen oder kontrolliert sind welche den Durchfluss der Luft nur in eine Richtung, z.B. aus der unteren Tragfläche 2 in die obere Tragfläche 1, ermöglichen.

Im Bereich der vertikalen Stütze 4 sind das Untersegel der oberen Tragfläche 1 und das Obersegel der unteren Tragfläche 2 mit je einem Durchlass ausgestattet welcher eventuell mit einer, an der Stütze 4 anliegenden, elastischen Manschette oder einer Gewebemanschette ausgestattet ist so dass der Austritt von Luft aus dem Inneren der Tragfläche verhindert wird.

Die zusammengesetzten Gestänge 1 a, 2a bilden, zusammen mit der vertikalen Stütze 4, einen stabilisierenden Rahmen für die zusammengesetzte Tragfläche des Gleitschirms welcher geeignet ist elastisch die Form der zusammengesetzten Tragfläche, auch während extremer Flugbedingungen, zu unterstützen.

Die aus zwei Tragflächen zusammengesetzte Tragfläche ermöglicht erfindungsgemäß das Erreichen eines gleichen aerodynamischen Auftriebes wie er durch eine traditionelle bekannte Tragfläche erreicht wird, wobei die zusammengesetzte erfindungsgemäße Tragfläche eine kleinere Spannweite als die traditionelle, bekannte Tragfläche aufweist.

Im Falle dass die Steuerleinen, sei es an der oberen Tragfläche 1, als auch an der unteren Tragfläche 2 angebracht sind, ist es möglich eventuell besondere Manövriereigenschaften zu erreichen.

Die untere Tragfläche 2 hat wesentlich gleichen Querschnitt über ihre gesamte Erstreckung, dieser Querschnitt ist vorteilhafterweise kleiner in Bezug auf den Querschnitt im mittleren Bereich der oberen Tragfläche 1 um nicht mit den Leinen, welche an der oberen Tragfläche 1 befestigt sind und in Richtung Gurtzeug des Piloten zusammenlaufen, zu interferieren.

Wegen der wesentlich geradlinigen horizontalen Form der unteren Tragfläche 2 bewirkt diese, trotz des kleinere Flügelquerschnittes, dadurch dass dieser über die gesamte Spannweite konstant ist, einen beachtenswerten Auftrieb.

## Patentansprüche

1. Tragfläche mit innerer Aussteifung für Gleitschirme, bestehend aus einer Reihe von Kammerzellen welche durch Gewebe-Profilrippen mit Querdurchlässen für den Luftdurchzug ausgestattet sind, wobei dieser über die, an der Eintrittskante vorgesehenen, Eintrittöffnungen einströmt und das Aufblasen der Tragfläche bewirkt, ausgestattet mit Leinenbündel an welchen das Gurtzeug des Piloten befestigt ist und mit Leinen für die Steuerung des Gleitschirms, wobei die Tragfläche von der zusammengesetzten Art ist und von einer oberen bogenförmigen Tragfläche (1) gebildet ist welche an den Enden mit einer unteren geradlinigen Tragfläche (2) verbunden ist und wobei die innere Aussteifung aus einer Struktur besteht welche aus einem in der oberen bogenförmigen Tragfläche (1) vorgesehenen, nach Art eines Längsholmes angeordneten, Gestänge (1a) besteht welches die einzelnen Gewebe-Profilrippen (1 b) der Kammerzellen durchquert und mit den Enden an den Enden, oder im Bereich der Enden, eines Gestänges (2a) befestigt ist welches, nach Art eines Längsholmes, im Inneren der wesentlich geradlinigen unteren Tragfläche (2) angeordnet ist, wobei eine vertikale Stütze (4) das obere Gestänge (1a) mit dem unteren Gestänge (2a) in den entsprechenden, mit eigener Verbindungskupplung (4a, 4b) versehenen, Mittelbereichen der Gestänge (1 a, 2a), verbindet.

2. Tragfläche für Gleitschirme, gemäß Anspruch 1, **dadurch gekennzeichnet, dass** die im Inneren der Tragflächen (1,2) angeordneten Gestänge (1a, 2a) die einzelnen Gewebe-Profilrippen (1b, 2b) durch einen der jeweiligen Querdurchbrüche (1c, 2c), im Mittelbereich zwischen dem Ober- und Untersegel der entsprechenden Tragflächen und wenig hinter der jeweiligen Eintrittskante (1 x, 2x) der entsprechenden Tragflächen (1, 2), durchqueren.

3. Tragfläche für Gleitschirme, gemäß Anspruch 1, **dadurch gekennzeichnet dass** die Gestänge (1a, 2a) und die vertikale Stütze (4) aus mehreren Stab- oder Rohrelementen bestehen welche in Längsrichtung zusammensteckbar oder teleskopisch ausziehbar sind, wobei die Steck oder Ausziehverbindung mit einer bekannten Arretierung gegen ein ungewolltes Ausziehen, bzw. ein ungewolltes Zusammenschieben, versehen ist.

4. Tragfläche für Gleitschirme, gemäß Anspruch 1, **dadurch gekennzeichnet, dass** die untere, wesentlich geradlinige Tragfläche (2) sich über die Bereiche der Verbindung (5) zwischen den Gestängen (1 a, 2a) hinaus erstreckt und dass zwischen der bogenförmige obere Tragfläche (1) und der unteren geradlinigen Tragfläche (2), im Bereich der Verbindungen (5), die Luft frei durchziehen kann oder über ein bekanntes Ventil nur in eine Richtung durchziehen kann.

5. Tragfläche für Gleitschirme, gemäß Anspruch 1, **dadurch gekennzeichnet, dass** sich die obere bogenförmige Tragfläche (1), über die Bereiche der Verbindung (5) mit der unteren Tragfläche (2), nach unten erstreckt.

6. Tragfläche für Gleitschirme, gemäß Anspruch 1, **dadurch gekennzeichnet, dass** die Leinen für die Steuerung des Gleitschirms ausschließlich an der oberen bogenförmigen Tragfläche (1) oder teils an der oberen Tragfläche und teils an der unteren wesentlich geradlinigen Tragfläche (2) befestigt sind.

## Claims

1. An aerofoil with internal reinforcement for paragliders, consisting of a row of chamber cells which through fabric profile ribs are equipped with transverse apertures for the passage of air, wherein the latter flows in via the inlet openings provided on the leading edge and causes the aerofoil to inflate, equipped with line bundles to which the harness of the pilot is fastened and with lines for controlling the paraglider, wherein the aerofoil is of the composite type and is formed by an upper, arc-shaped aerofoil (1) which is connected at the ends to a lower, rectilinear aerofoil (2), and wherein the internal reinforcement consists of a structure which consists of a rod (1 a) provided in the upper, arc-shaped aerofoil (1) and arranged in the manner of a longitudinal spar, which rod passes through the individual fabric profile ribs (1 b) of the chamber cells and is fastened by the ends to the ends, or in the region of the ends, of a rod (2a) which is arranged in the manner of a longitudinal spar in the interior of the substantially rectilinear lower aerofoil (2), wherein a vertical support (4) connects the upper rod (1 a) to the lower rod (2a) in the corresponding central regions of the rods (1 a, 2a), said central regions being provided with a dedicated connection coupling (4a, 4b).

2. The aerofoil for paragliders according to claim 1, **characterized in that** the rods (1 a, 2a) arranged in the interior of the aerofoils (1, 2) pass through the individual fabric profile ribs (1b, 2b) through one of the respective transverse apertures (1 c, 2c), in the central region between the upper and lower sail of the corresponding aerofoils and a little behind the respective leading edge (1x, 2x) of the corresponding aerofoils (1, 2).

3. The aerofoil for paragliders according to claim 1, **characterized in that** the rods (1a, 2a) and the vertical support (4) consist of a plurality of pole elements or tube elements which can be plugged together or telescopically pulled out in the longitudinal direction, wherein the plug-in or pull-out connection is provided with a known arresting mechanism to prevent undesired pulling-out or undesired pushing-together.

4. The aerofoil for paragliders according to claim 1, **characterized in that** the lower, substantially rectilinear aerofoil (2) extends beyond the regions of the connection (5) between the rods (1 a, 2a), and **in that** the air can freely pass through between the arc-shaped upper aerofoil (1) and the lower, rectilinear aerofoil (2), in the region of the connections (5), or can pass through only in one direction via a known valve.

5. The aerofoil for paragliders according to claim 1, **characterized in that** the upper, arc-shaped aerofoil (1) extends downwards beyond the regions of the connection (5) to the lower aerofoil (2).

6. The aerofoil for paragliders according to claim 1, **characterized in that** the lines for controlling the paraglider are fastened exclusively to the upper, arc-shaped aerofoil (1) or in part to the upper aerofoil and in part to the lower, substantially rectilinear aerofoil (2).

## Revendications

1. Surface portante avec renforcement interne pour parapentes, composée d'une série de cellules à compartiments équipées de lamelles profilées en tissu pourvues de passages transversaux pour la circulation d'air, l'air arrivant par des orifices d'entrée prévus sur le bord d'attaque et entraînant le gonflage de la surface portante, équipée de faisceaux de cordes auxquels est fixé le harnais du pilote, ainsi que de cordes destinées au pilotage du parapente, la surface portante étant une surface assemblée et constituée d'une surface portante supérieure curviligne (1) reliée à ses extrémité à une surface portante inférieure rectiligne (2), et le renforcement interne étant composé d'une structure constituée d'une armature (1a) prévue dans la surface portante supérieure curviligne (1), disposée à la manière d'un longeron, ladite structure traversant les différentes lamelles profilées en tissu (1b) des cellules à compartiments et étant fixée à ses extrémités aux extrémités ou au niveau des extrémités d'une armature (2a), disposée à la manière d'un longeron, à l'intérieur de la surface portante inférieure essentiellement rectiligne (2), un montant vertical (4) reliant l'armature supérieure (1a) à l'armature inférieure (2a) dans les parties centrales correspondantes des armatures (1a, 2a), munies de leur propre raccord d'accouplement (4a, 4b).

2. Surface portante pour parapentes selon la revendication 1, **caractérisée en ce que** les armatures (1a, 2a) disposées à l'intérieur des surfaces portantes (1, 2) traversent les différentes lamelles profilées en tissu (1b, 2b) par l'un des passages transversaux (1c, 2c) dans la partie centrale située entre la voile supérieure et la voile inférieure des surfaces portantes correspondantes et un peu en arrière du bord d'attaque respectif (lx, 2x) des surfaces portantes correspondantes (1, 2).

3. Surface portante pour parapentes selon la revendication 1, **caractérisée en ce que** les armatures (1a, 2a) et le montant vertical (4) sont composés de plusieurs éléments tubulaires ou en forme de tige, enfichables ou télescopiquement extensibles dans le sens longitudinal, les raccords d'enfichage ou d'extension étant munis d'un dispositif d'arrêt connu permettant d'éviter tout retrait ou tout enfoncement involontaires.

4. Surface portante pour parapentes selon la revendication 1, **caractérisée en ce que** la surface portante inférieure essentiellement rectiligne (2) s'étend au-delà des parties de raccord (5) entre les armatures (1a, 2a), et **en ce que**, entre la surface portante supérieure curviligne (1) et la surface portante inférieure rectiligne (2) dans la zone des raccords (5), l'air puisse circuler librement ou ne puisse circuler que dans une direction par une valve connue.

5. Surface portante pour parapentes selon la revendication 1, **caractérisée en ce que** la surface portante supérieure curviligne (1) descend sur les zones de raccord (5) avec la surface portante inférieure (1).

6. Surface portante pour parapentes selon la revendication 1, **caractérisée en ce que** les cordes de pilotage du parapente sont uniquement fixées à la surface portante supérieure curviligne (1), ou en partie à la surface portante supérieure et en partie à la surface portante inférieure essentiellement rectiligne (2).
